# EUROPÄISCHE PATENTSCHRIFT

(11) **EP 2 516 332 B1**
(45) Veröffentlichungstag und Bekanntmachung des Hinweises auf die Patenterteilung: **02.04.2014**
(21) Anmeldenummer: 10790552.3
(22) Anmeldetag: 08.12.2010
(51) Int. Cl.: C01G 37/033

(54) **VERFAHREN ZUR HERSTELLUNG VON CHROM(III)OXID**
METHOD FOR PRODUCING CHROMIUM (III) OXIDE
PROCÉDÉ DE FABRICATION D'OXYDE DE CHROME (III)

(30) Priorität: 22.12.2009 EP 09180385
(43) Veröffentlichungstag der Anmeldung: 31.10.2012
(60) Teilanmeldung: 12182421.3
(73) Patentinhaber: LANXESS Deutschland GmbH, 50569 Köln (DE)
(72) Erfinder: FRIEDRICH, Holger, 2940 Newcastle (ZA); ORTMANN, Rainer, 50859 Köln (DE); STENGER, Matthias, 40789 Monheim (DE); VAN ROOYEN, Daniel, 2940 Newcastle (ZA); KALIDEEN, Naveen, 2940 Newcastle (ZA); BOLL, Matthias, 51061 Köln (DE)
(74) Vertreter: Herbold, Matthias
(86) Internationale Anmeldenummer: PCT/EP2010/069211
(87) Internationale Veröffentlichungsnummer: WO 2011/076573

(56) Entgegenhaltungen:
- CN-A- 1 418 821
- CN-A- 1 418 822
- FR-A1- 2 414 477
- KHAN A A ET AL: 15. März 1972 (1972-03-15), ACTA CRYSTALLOGRAPHICA, SECTION B (STRUCTURAL CRYSTALLOGRAPHY AND CRYSTAL CHEMISTRY) DENMARK, VOL. B28, PAGE(S) 683 - 693, XP002577529, ISSN: 0567-7408 das ganze Dokument
- JOHNSON S W: "chemische Notizen", JOURNAL FÜR PRAKTISCHE CHEMIE, Bd. 62, Nr. 1, 1854, Seiten 261-264, XP002585557,

## Beschreibung

Die Erfindung betrifft ein Verfahren zur Herstellung von Chrom(III)oxid.

Chrom(III)-oxid ist ein vielseitiges Produkt mit einer breiten Anwendungspalette. So kann es als Pigment zum Einfärben von unterschiedlichen Anwendungsmedien, wie beispielsweise Baustoffen, Kunststoffen, Farben & Lacken, Gläsern oder Keramiken verwendet werden. Für dieses Anwendungsgebiet ist ein möglichst niedriger Gehalt an wasserlöslichen Verunreinigungen gefordert.

Darüber hinaus wird Chrom(III)-oxid auch in Schleifmitteln und hochtemperaturbeständigen Werkstoffen verwendet. Für den Einsatz von Chrom(III)-oxid in hochtemperaturbeständigen Werkstoffen ist ein möglichst niedriger Alkalimetall-Gehalt gewünscht, um die bei hohen Temperaturen und der Anwesenheit von Alkalimetall-Ionen begünstigte Oxidation von Cr(III) zu Alkalimetallchromat so weit als möglich zu unterdrücken.

Ein weiteres wichtiges industrielles Einsatzgebiet für Chrom(III)-oxid ist die Verwendung als Ausgangsmaterial für die Herstellung von Chrommetall und/oder chromhaltigen Hochleistungslegierungen. Hier können in aller Regel nur Chrom(III)-oxide eingesetzt werden, die sich durch einen niedrigen Schwefel-Gehalt und einen niedrigen Kohlenstoff-Gehalt auszeichnen. Der Begriff "schwefelarmes Chrom(III)-oxid" wird daher häufig als Synonym für "Chrom(III)-oxid für metallurgische Zwecke" verwendet.

Chrom(III)-oxid kann nach dem Stand der Technik mit verschiedenen Verfahren hergestellt werden. Meist wird es bei höheren Temperaturen aus sechswertigen Chromverbindungen hergestellt, wobei unterschiedliche Reinheitsgrade erreicht werden können. Als Ausgangsverbindungen des sechswertigen Chroms werden Chromsäure, Ammoniumchromate oder Alkalichromate verwendet. Die Reaktion kann mit oder ohne Zusatz eines Reduktionsmittels durchgeführt werden. Als Reduktionsmittel dienen organische oder anorganische Reduktionsmittel wie Sägespäne, Melasse, Celluloseablaugen, Acetylen, Methan, Schwefel und dessen Verbindungen, Phosphor, Kohlenstoff, Wasserstoff und dergleichen. Derartige Verfahren sind in zahlreichen Schutzrechten beschrieben. Beispielhaft seien dazu nur die US 1,893,761 und DE-A-20 30 510 erwähnt. Die US 1,893,761 offenbart die Herstellung von Chrom(III)-oxid durch die Reduktion von Alkalimetallchromaten mit organischen Substanzen. Bei der Verwendung von Kohlenstoff oder organischen Verbindungen als Reduktionsmittel kann der Prozess so geführt werden, dass schließlich Natriumcarbonat als Nebenprodukt erhalten wird, wie bereits in US 1,893,761 erwähnt. Dieses kann gegebenenfalls in den Produktionsprozess von Natriumdichromat zurückgeführt werden, wenn das Natriumdichromat über einen oxidativen alkalischen Aufschluss ausgehend von Chromerz hergestellt wird. Allerdings enthält das auf diese Weise erhaltene Chrom(III)-oxid einen hohen Kohlenstoff-Anteil, der es für die metallurgische Anwendung ungeeignet macht. Die DE-A-20 30 510 beschreibt ein Verfahren zur kontinuierlichen Herstellung von sehr reinem, schwefelarmem Chrom(III)-oxid, durch Reduktion von Alkalichromaten mit Wasserstoff bei höheren Temperaturen sowie eine dafür geeignete Vorrichtung. Die Reaktionstemperatur beträgt zwischen 1000-1800°C, vorteilhafterweise zwischen 1100-1400 °C, und das erhaltene Produkt wird mit Hilfe einer alkalisch eingestellten Dispersion vom Abgas getrennt. Nachteilig bei all diesen Verfahren, die mit einem Reduktionsmittel arbeiten, ist jedoch, dass durch den Einsatz des Reduktionsmittels zwangsläufig ein Nebenprodukt anfällt, das aufgearbeitet werden muss.

Die thermische Zersetzung von reinem Ammoniumdichromat führt dagegen selbst zu keinem nennenswerten Zwangsanfall eines Nebenproduktes, da sie im Idealfall nach der Reaktionsgleichung

(NH₄)₂Cr₂O₇ → Cr₂O₃ + N₂ + 4 H₂O (1)

verläuft und ab einer Temperatur von ca. 200°C abläuft. Allerdings gehen die heute praktizierten technischen Verfahren zur Herstellung von Ammoniumdichromat von Alkalidichromaten - meist Natriumdichromat - aus. Dabei wird das Natriumdichromat mit Ammoniumchlorid oder Ammoniumsulfat zum Ammoniumdichromat und Natriumchlorid beziehungsweise zum Ammoniumdichromat und Natriumsulfat umgesetzt. Chrom(III)-oxid für metallurgische Zwecke wurde früher industriell hergestellt, indem man in einem Ofen eine Mischung aus Ammoniumdichromat und Natriumchlorid kalzinierte, die durch in-situ-Reaktion von Natriumdichromat und Ammoniumchlorid in praktisch stöchiometrisch äquivalenten Mengen erhalten wurde. Die Kalzinierungstemperatur sollte über 700 °C liegen, um sicherzustellen, dass das Reaktionsgemisch einen hohen Chrom(III)-oxid-Anteil aufweist; bei einer zu hohen Temperatur erhöht sich allerdings das Risiko der Schlackenbildung im Ofen, und die Temperatur wird daher im allgemeinen unter 850 °C gehalten.

Die Verwendung von Ammoniumsulfat anstelle von Ammoniumchlorid ist häufig bevorzugt, da das Ammoniumchlorid aufgrund seiner niedrigen Sublimationstemperatur bei der Kalzinierung als NH₃ und HCl absublimiert und so in die Abluft gelangen kann. Aus diesem Grunde hat der Einsatz von Ammoniumchlorid heute keine wirtschaftliche Bedeutung mehr. Der Nachteil des Einsatzes von Ammoniumsulfat liegt allerdings darin, dass auf diese Weise Schwefel in den Produktionsprozess eingeschleppt wird, obwohl ein Chrom(III)-oxid mit möglichst niedrigem Schwefel-Gehalt gewünscht ist.

In der DE-A-26 35 086 (US-A-4235862) ist ein Verfahren zur Herstellung eines schwefelarmen Chrom(III)-oxides offenbart, das durch Glühen eines Gemisches von Alkalidichromat und Ammoniumsulfat bei einer Kalziniertemperatur von 800 bis 1100 °C und Abtrennen des gebildeten Chrom(III)-oxides von gebildetem Alkalisalz gekennzeichnet ist, wobei pro Mol Alkalichromat 0.7 bis 0.89, vorzugsweise 0.7 bis 0.84 Mol Ammoniumsulfat eingesetzt werden. Die Aufarbeitung des Chrom(III)-oxids nach der Glühung erfolgt in konventioneller Weise durch Auswaschen von wasserlöslichen Salzen und Trocknen. Nach diesem Verfahren können Schwefelgehalte im Chrom(III)-oxid von 50 bis 100 ppm erreicht werden. Nachteilig bei diesem Verfahren ist, dass zur Erzielung niedriger Schwefelgehalte die Ausgangssubstanzen nicht im stöchiometrischen Verhältnis gemischt werden dürfen und Ammoniumsulfat im deutlichen Unterschuss eingesetzt wird. Daraus resultieren niedrige Umsätze im Bereich von ca. 90 % und die Einhaltung einer hohen Glühtemperatur ist erforderlich. Das aufgrund des Überschusses vorhandene Alkalidichromat zersetzt sich thermisch zu Alkalichromat, Chrom(IIn-oxid und Sauerstoff. Somit entsteht bei der Reaktion neben einer großen Mengen Alkalisulfat (zum Beispiel Natriumsulfat) auch immer Alkalichromat (zum Beispiel Natriumchromat), welches beim späteren Auswaschen in die Mutterlauge oder Waschflüssigkeit gelangt und dann abgetrennt werden muss, um es gegebenenfalls in den Prozess zurückzuführen. Die Mutterlauge enthält dann aber auch den Zwangsanfall an Alkalisulfat, der aufwendig gereinigt werden muss, da er stets mit Alkalichromat verunreinigt ist. Außerdem haben sich in der Praxis die zur Herstellung von schwefelarmem Chrom(III)-oxid vorgeschlagenen Bedingungen als schwierig durchführbar erwiesen, da der Natriumsulfatgehalt der Reaktionsmischung bei den erforderlichen hohen Temperaturen zu Zusammenbackungen führt (Schmelztemperatur von Natriumsulfat ca. 885 °C) und damit zu Störungen im Produktionsablauf.

Zur Herstellung von Chrom(III)-oxid mit niedrigeren Schwefel-Gehalten offenbart die US 4,296,076 (FR-A-2414477 = DE-A-2901736) ein Verfahren, bei dem unter anderem Natriumdichromat und Ammoniumchlorid beziehungsweise Natriumdichromat und Ammoniumsulfat eingesetzt werden. Im Gegensatz zur DE-A-26 35 086 wird dabei im Wesentlichen ein stöchiometrisches Verhältnis gewählt oder vorzugsweise ein Überschuss der Ammoniumverbindung eingesetzt. In einem ersten Reaktionsschritt werden dabei die Ausgangsverbindungen zu Ammoniumdichromat und Natriumchlorid beziehungsweise Ammoniumdichromat und Natriumsulfat umgesetzt. In den offenbarten Beispielen findet dieser Reaktionsschritt bei 400 bis 800 °C statt, anschließend die wässrige Aufarbeitung und dann noch ein zweiter Glühprozess bei einer Temperatur über 1100 °C. Nach diesem Verfahren werden Schwefel-Gehalte im Chrom(III)-oxid von unter 40 ppm erreicht. Bei diesem Verfahren fallen allerdings große Mengen Natriumchlorid beziehungsweise Natriumsulfat an, die aufwendig gereinigt werden müssen. Außerdem ist der Einsatz der genannten Ammoniumverbindungen, insbesondere von Ammoniumchlorid, nicht unproblematisch, weil sie sehr leicht sublimieren und somit in die Abgasluft gelangen können.

Ein anderes im Stand der Technik beschriebenes Verfahren zur Herstellung von qualitativ hochwertigem Chrom(III)-oxid wird in RU 2 258 039 offenbart. Zwar wird auch hier Ammoniumdichromat - gewonnen durch Umsetzung von Natriumdichromat mit Ammoniumsulfat in wässriger Phase - für die Herstellung von Chrom(III)-oxid eingesetzt, allerdings wird das bei der Umsetzung zwangsweise anfallende Natriumsulfat aus dem Reaktionsgemisch abgetrennt, so dass ein relativ reines, das heißt schwefelarmes, Ammoniumdichromat thermisch zum Chrom(III)-oxid zersetzt wird. Es fällt stets Natriumsulfat als Nebenprodukt an, das aufwändig gereinigt werden muss, da es mit Cr(VI) verunreinigt ist.

Die thermische Zersetzung von reiner Chromsäure (2) ist unter anderem in der Literatur als Reaktion beschrieben (zum Beispiel Ullmann's Encyclopedia of Industrial Chemistry, Vol. A7, Seite 87, VCH Verlag, 1986)

4 CrO₃ → 2Cr₂O₃₊3O₂ (2)

Auch im Fall von Chromsäure als Ausgangsmaterial zur Herstellung von Chrom(III)-oxid werden in der Regel in einem ersten Schritt Alkalichromate mit Schwefelsäure und/oder hydrogensulfathaltigen Verbindungen zu Alkalidichromaten umgesetzt (3) und danach mit weiterer Schwefelsäure in Chromsäure überführt (4).

2 Na₂CrO₄ + H₂SO₄ → Na₂Cr₂O₇ + Na₂SO₄ + H₂O (3)

Na₂Cr₂O₇ + H₂SO₄ → 2 crO₃ + Na₂SO₄ + H_{2O} (4)

Folglich fallen auch bei diesen Verfahren zur Herstellung von Chrom(III)-oxid erhebliche Mengen an Alkalisulfaten, zum Beispiel Natriumsulfat, als Nebenprodukte an. Bei dem erwähnten Verfahren, der thermischen Zersetzung von reiner Chromsäure ausgehend von Natriumchromat entstehen pro Kilogramm Chrom(III)-oxid circa 1,9 kg Natriumsulfat (Kombination aus (3), (4) und (2)). Das Natriumsulfat ist stets mit Natriumchromat verunreinigt, so dass es von minderer Qualität ist und vor einer Vermarktung erst noch aufwendig gereinigt werden muss. Außerdem ist Chromsäure ein sehr starkes Oxidationsmittel und eine extrem korrosiv wirkende Verbindung. Ihre Handhabung in technischen Prozessen bei höheren Temperaturen ist entsprechend schwierig.

Zur Herstellung von schwefelarmem Chrom(III)-oxid sind auch andere Verfahren beschrieben, bei denen weitgehend schwefel- und kohlenstofffreie Ausgangsstoffe eingesetzt werden.

In DE-A-28 52 198 (US-A-4230677) erfolgt die Herstellung von Ammoniummonochromat durch Umsetzung von Natriumdichromat oder Natriummonochromat mittels einer Lösungsmittelextraktion aus einem organischen Lösungsmittel. Die anschließende Kalzinierung zu Chrom(III)-oxid erfolgt bei 500 °C. Nachteil dieser Methode ist, dass mit sehr stark verdünnten wässrigen Lösungen gearbeitet wird. So liegt die Konzentration des Chroms - gerechnet als Cr₂O₃ - in der zu extrahierenden wässrigen Lösung im Bereich von 1 g/l bis 25 g/l, wobei als besonders bevorzugte Konzentration 8.2 g/l angegeben ist. Auch in der organischen Phase kann nach zwei Extraktionsstufen nur eine Cr₂O₃-Konzentration von 10 g/l erreicht werden. Dadurch müssen sehr große Flüssigkeitsmengen gehandhabt, wiederaufgearbeitet und im Kreislauf geführt werden. Als organische Lösungsmittel werden Benzol, Xylol oder Toluol allein oder gemischt mit einem isoparaffinischen Kohlenwasserstoff eingesetzt. Bei allen diesen Stoffen handelt es sich um Gefahrstoffe, da sie leichtentzündlich sind, so dass bei Ausübung dieses Verfahrens umfangreiche Maßnahmen zum Schutz der Mitarbeiter und der Umwelt getroffen werden müssen. Des Weiteren findet die Extraktion bei einem pH-Wert zwischen 1 und 2, statt, wofür Salzsäure verwendet wird. Dadurch entsteht eine nicht unerhebliche Menge an Natriumchlorid, die das Abwasser belastet. Die eingesetzten organischen Lösungsmittel weisen alle eine merkliche Wasserlöslichkeit auf (Löslichkeiten bei 20 °C in Wasser: Benzol 1.77 g/l, Toluol 0.47 g/l, Xylol 0.2 g/l), so dass das Abwasser zusätzlich eine hohe Fracht an organischen Verbindungen mit sich führt und aufwendig gereinigt werden muss. Aufgrund seiner zahlreichen Nachteile hat dieses Verfahren bisher keine wirtschaftliche Bedeutung erlangt.

Die thermische Behandlung von Natriumdichromat bei höheren Temperaturen führt auch ohne Anwesenheit eines Reduktionsmittels zu Chrom(III)-oxid. So zersetzt sich Na₂CrO₂H₇*2H₂O nach den Untersuchungen von S. Sampath et al. (Thermochimica Acta, 159 (1990), S. 327-335) ab einer Temperatur von 500 °C langsam zu Na₂CrO₄ und Cr₂O₃.

4 Na₂Cr₂O₇*2H₂O → 4 Na₂CrO₄ + 2 Cr₂O₃ + 3 O₂ + 8 H₂O (5)

Gemäß der chemischen Reaktionsgleichung werden im Idealfall maximal 50 mol-% des eingesetzten Cr(VI) in Chrom(III)-oxid überführt. Während des Aufheizvorgangs erfolgt bei 83 °C zuerst der Übergang von kristallwasserhaltigem Natriumdichromat zur wasserfreien Verbindung. Das kristallwasserfreie Natriumdichromat schmilzt bei 357 °C, so dass die Zersetzung in der Schmelze stattfindet. Dadurch wird der Umsetzungsgrad bei der Reaktion nochmals deutlich erniedrigt. Die Reaktionsgeschwindigkeit ist bei 500°C noch sehr niedrig, so dass höhere Temperaturen angewendet werden müssen, um akzeptable Reaktionsgeschwindigkeiten zu erreichen. So werden beispielsweise bei der Zersetzung von wasserfreiem Natriumdichromat bei 750 °C nur ca. 25 mol% Cr(VI) in Cr₂O₃ überfährt. Durch die geringe Ausbeute wird dieses Verfahren für die Herstellung von Chrom(III)-oxid im technischen Maßstab uninteressant.

In CN-A-1310132 erfolgt die Herstellung von Ammoniumchromat durch Umsetzung von Natriumchromat in Gegenwart von Kohlendioxid und Ammoniak. Das nach diesem Verfahren hergestellte Ammoniumchromat soll für die Herstellung von Chrom(III)-oxid eingesetzt werden können. Das offenbarte Verfahren zur Herstellung von Ammoniumchromat weist jedoch mehrere Nachteile auf. Zum einen muss die eingesetzte Natriumchromat-Lösung zu Beginn umkristallisiert und filtriert werden. Es ist also ein - nur unvollständig beschriebener - Reinigungsschritt erforderlich, bei dem Natriumchlorid als Nebenprodukt anfällt. Zum anderen erfolgt die Umsetzung mit Kohlendioxid und Ammoniak in zwei Verfahrensschritten, bei denen jeweils Kohlendioxid und Ammoniak zugesetzt werden. Die Abtrennung des nach der ersten Umsetzung gebildeten Natriumhydrogencarbonats erfolgt durch Kühlkristallisation, wobei die Abkühlrate bei 1 °C/h bis 4 °C/h liegt. Dadurch ist die Kristallisation ein sehr langsamer und zeitintensiver Prozess, zumal in allen offenbarten Beispielen vor der Filtration auch noch ein zweistündiger Alterungsschritt stattfindet. Die Bedingungen unter denen aus dem erhaltenen Ammoniumchromat Chrom(III)-oxid hergestellt werden soll, werden in CN-A-1310132 jedoch nicht offenbart.

Der Einsatz von reinem Ammoniumchromat oder Ammoniumdichromat für die thermische Zersetzung zur Herstellung von reinem Chrom(III)-oxid ist generell nicht unkritisch, da die Zersetzung im trockenen Zustand explosionsartig erfolgen kann. Ammoniumdichromat ist daher auch als Gefahrstoff mit den Gefahrensymbol "E" (explosiv) eingestuft. Die Zersetzungsreaktion ist deswegen schwer beherrschbar. Das aus dieser Reaktion erhaltene Cr₂O₃-Zersetzungsprodukt zeichnet sich durch ein extrem niedriges Schüttgewicht aus, das im Bereich vom 0.1 bis 0.2 g/cm³ liegen kann. Dadurch neigt das erhaltene Cr₂O₃-Zersetzungsprodukt sehr stark zum Stauben. In einem technischen Prozess muss die Abluft von einer großen Menge Staub gereinigt werden. Der Staub enthält außerdem noch nicht umgesetzte Anteile an Cr(VI).

In CN-A-1418822 wird die gleichzeitige Herstellung von Alkalimetalldichromaten und Chrom(III)-oxid offenbart, welche dadurch gekennzeichnet ist, dass ein Alkalimetallchromat mit Ammoniumchromat oder Ammoniumdichromat im molaren Verhältnis von Alkalimetallchromat : Ammoniumchromat oder Ammoniumdichromat = (0.3 - 3) : 1 gemischt wird und die Mischung im Temperaturbereich von 650 °C bis 1200 °C für 0.5 bis 3 Stunden geglüht wird. Das geglühte Produkt wird in Wasser gelöst. Nach einer Fest/Flüssig-Trennung besteht der feste Rückstand aus schwefelarmem Chrom(III)-oxid. Aus der aufkonzentrierten Mutterlauge wird durch Abkühlung Alkalimetalldichromat auskristallisiert. Das feste Alkalimetalldichromat wird über eine Fest/Flüssig-Trennung von nicht abreagiertem Alkalimetallchromat abgetrennt. In den offenbarten Beispielen werden Mischungen aus Natriumchromat (Na₂CrO₄*4H₂O) und Ammoniumchromat, Natriumchromat (Na₂CrO₄) und Ammoniumdichromat, Kaliumchromat (K₂CrO₄) und Ammoniumchromat sowie Kaliumchromat (K₂CrO₄) und Ammoniumdichromat eingesetzt. Die Ausbeute an Chrom(III)-oxid in Bezug auf das in den Ausgangsmischungen vorhandene Cr(VI) schwankt bei den Beispielen 1 bis 3 zwischen 36 und 40 %. Außerdem ist das Reaktionsprodukt, wie es zum Beispiel aus den Beispielen 1 und 2 erhalten wird, sehr klebrig. Dadurch wird eine technische Realisierung beispielsweise über einen Drehrohrofen sehr schwierig.

Im Übrigen wird das Ammoniumchromat in den Beispielen maximal im Verhältnis 1 : 1 zum Alkalichromat oder im stöchiometrischen Unterschuss eingesetzt.

Aus CN1418821 ist bekannt, dass man schwefelfreies Chromoxid durch Kalzinierung bei 650 - 1200 °C von einem 1 : 1 Ammoniumchromat-Alkalimetall-Doppelsalz erhalten kann. Der Nachteil bei dem dort beschriebenen Verfahren ist jedoch, dass die Ausbeute an Chromoxid lediglich um die 23 % in Bezug auf das in der Ausgangsverbindung enthaltene Cr(VI) beträgt und das Verfahren somit keine wirtschaftliche Methode zur Gewinnung von Chromoxid darstellt. Selbst wenn man berücksichtigt, dass die in den Beispielen der vorliegenden Anmeldung eingesetzten Doppelsalze ein NH₄ : Na Verhältnis zu 3 : 1 anstelle von 1 : 1 haben müsste man aus der gleichen Menge eine Ausbeute von 34,5% bezogen auf das Ausgangsprodukt erhalten. Stattdessen werden durchschnittlich ca. 60% erhalten, was eine deutliche Verbesserung gegenüber dem Stand der Technik darstellt. Ein weiterer Nachteil ist, dass der Na-Anteil - gerechnet als Na-Metall - im erhaltenen Chromoxid mit 1900 ppm sehr hoch ist. Außerdem erweist sich die Reaktionsmischung ab einer Temperatur von ca. 700 °C, bei der die Kalzinierung stattfindet, als sehr klebrig, womit insbesondere eine technische Realisierung beispielsweise über einen Drehrohrofen sehr schwierig ist.

Die Aufgabe der Erfindung lag darin, ein Verfahren zur Herstellung von Chromoxid zu finden, das wirtschaftlich nutzbar ist und zudem ein Chromoxid hervorbringt, das für metallurgische Zwecke einsetzbar ist, also insbesondere einen geringen Schwefelgehalt und Alkalimetallgehalt, insbesondere Natrium-Gehalt sowie möglichst wenige Nebenprodukte besitzt.

Die Erfindung betrifft daher ein Verfahren zur Herstellung von Chrom(III)-oxid, enthaltend die Schritte:
a) Zersetzung eines Alkalimetall-Ammoniumchromat-Doppelsalz, bei einer Temperatur von 200 bis 650 °C, insbesondere von 250 bis 550 °C,
b) waschen des nach a) erhaltenen Zersetzungsproduktes und
c) kalzinieren des nach b) erhaltenen Produktes bei einer Temperatur von 700 bis 1400 °C, insbesondere von 800 bis 1300 °C, dadurch gekennzeichnet, dass das Alkalimetall-Ammoniumchromat-Doppelsalz ein Natrium-Ammoniumchromat-Doppelsalz enthält, welches ein molares Ammonium : Natrium-Verhältnis von ≥ 2 aufweist.

### Schritt a)

Für das erfindungsgemäße Verfahren können die bereits in der Literatur erwähnten Verbindungen NaNH₄CrO₄*2H₂O (Acta-Phys.-Chem. Sin, 21 (2) 2005, S. 218-220 oder Trudy po Khimii i Khimicheskoi Technologii (3) 1966, S. 20-6) oder KNH₄CrO₄ als Ausgangsmaterialien verwendet werden. Bevorzugt sind insbesondere Alkalimetall-Ammoniumchromat-Doppelsalze der Zusammensetzung

Mₓ(NH₄)_{y}CrO₄

oder deren Hydrate, worin
- M: für Na oder K steht, besonders bevorzugt Na,
- x: für eine Zahl von 0.1 bis 0.9, vorzugsweise von 0.4 bis 0.7
- y: für eine Zahl von 1.1 bis 1.9, vorzugsweise von 1.3 bis 1.6 und
die Summe von x und y für 2 steht.

Besonders bevorzugt ist wird ein Alkalimetall-Ammoniumchromat-Doppelsalz eingesetzt, das ein Natrium-Ammoniumchromat-Doppelsalz ist, welches ein molares Ammonium : Natrium-Verhältnis von ≥ 1, insbesondere von ≥ 2 aufweist.

Die Doppelsalze können auch als Hydrate vorliegen, was aber für das erfindungsgemäße Verfahren unwesentlich ist.

Vorzugsweise werden die erfindungsgemäß zum Einsatz kommenden Alkalimetall-Ammoniumchromat-Doppelsalze in reiner Form (100%) eingesetzt. Es können aber auch Mischungen eines oder mehrerer Alkali-Metall-Ammoniumchromat-Doppelsalze mit Alkalichromaten oder Alkalidichromaten eingesetzt werden. Diese Mischungen enthalten bevorzugt weniger als 10 Gew.-%, insbesondere weniger als 5 Gew:%, besonders bevorzugt weniger als 2 Gew.% an weiteren Alkalichromaten oder Alkalidichromaten enthalten, wobei die Alkali-Metallchromate oder Alkali-metalldichromate in wasserfreier Form oder in Form ihrer Hydrate vorliegen können.

Das in CN-A-1418821 beschriebene Doppelsalz NaNH₄CrO₄*2H₂O kristallisiert in der Raumgruppe P2₁2₁2₁ mit den Gitterparametenn a = 841.3(5) pm, b=1303.9(8) pm und c = 621.9(4) pm sowie Z = 4 und ist isostrukturell zu NaNH₄SO₄*2H₂O (Acta Cryst., B28 1972, S. 683-93). Das bei dem erfindungsgemäßen Verfahren vorzugsweise zum Einsatz kommende Doppelsalz kristallisiert dagegen hexagonal in der Raumgruppe P-3ml. Mit Hilfe der Röntgenstruktruanalyse konnte die Kristallstruktur an einem Einkristall aufgeklärt werde (Gitterparameter a = 598.770(10) pm, b = 598.770(10) pm und c = 779.050(10) pm sowie Z = 2). Ein anhand der Einkristalldaten simuliertes Pulverdiffraktogramm stimmt sehr gut mit dem gemessenen Pulverdiffraktogramm der Gesamtprobe überein, allerdings können in der Pulveraufnahme auch starke Textureffekte auftreten. Idealisiert betrachtet beträgt das molare Ammonium : Natrium-Verhältnis in dieser Kristallstruktur 3. Tatsächlich kann es aber zu Abweichungen der Stöchiometrie beispielsweise durch Fehlbesetzungen kommen, so dass bei gleicher Kristallstruktur das Verhältnis von Ammonium zu Alkalimetall, insbesondere Natrium, 1.3 bis 1.6 zu 0.4 bis 0.7 beträgt. Dies kann auch zu Variationen bei den Gitterparametern führen. Kristallisieren aus Lösungen oder Schmelzen Akalimetallchromat und Ammoniumchromat unter Bildung dieses besonderen Kristallgitters, welches die Ionen beider Verbindungen enthält, so liegt beispielsweise ein Doppelsalz im Sinne dieser Erfindung vor. Bei der Auflösung in einer ausreichenden Menge Wasser, zerfällt ein solches Alkalimetall-Ammoniumchromat-Do ppelsalz in der Regel ganz oder überwiegend in die Ionen der Salze, aus denen sie sich aufbauen, das heißt Alkalimetall-, Ammonium- und Chromat-Ionen.

Die thermische Zersetzung des Alkalimetall-Ammoniumchromat-Doppelsalzes erfolgt vorzugsweise bei einer Temperatur von 200 bis 650 °C, besonders bevorzugt von 250 bis 550 °C bevorzugt, in einem Zeitraum von 5 Minuten bis 300 Minuten, besonders bevorzugt von 30 Minuten bis 240 Minuten. Die thermische Zersetzung kann beispielsweise in einem Drehrohrofen oder in einer Wirbelschicht erfolgen. Besonders bevorzugt wird ein indirekt beheizter Reaktor, beispielsweise ein indirekt beheizter Drehrohrofen, verwendet.

Die thermische Zersetzung des Alkali-Ammoniumchromat-Doppelsalzes gemäß Schritt a) ist mit der Freisetzung von Ammoniak verbunden, wie es die beiden - idealisierten - Reaktionsgleichungen (6) und (7) anhand von Natrium-Ammoniumchromat-Doppelsalzen beispielhaft veranschaulichen:

4 NaNH₄CrO₄*2H₂O → 2 Na₂CrO₄ + Cr₂O₃ + N₂ + 13 H₂O + 2 NH₃ (6)

8 Na_{0.5}(NH_{1.5}CrO₄ → 2 Na₂CrO₄ + 3 Cr₂O₃ + 3 N₂ + 15 H₂O + 6 NH₃ (7)

Besonders bevorzugt wird das erfindungsgemäße Verfahren so betrieben, dass man den bei der thermischen Zersetzung des Alkalimetall-Ammoniumchromat-Doppelsalzes freigesetzten Ammoniak als Gas oder wässrige Lösung zurück gewinnt und wieder für die Herstellung des Alkalimetall-Ammoniumchromat-Doppelsalzes einsetzt. Das freigesetzte Ammoniak-Gas wird vorzugsweise in Form einer wässrigen Ammoniak-Lösung kondensiert und dann entweder direkt als Ammoniak-Lösung oder gegebenenfalls nach erneuter Aufspaltung in gasförmigen Ammmoniak und Wasser wieder für die Herstellung des Alkalimetall-Ammoniumchromat-Doppelsalzes einsetzt.

Das nach dem Schritt a) erhaltene Zersetzungsprodukt erfüllt noch nicht die Anforderungen, die an ein Chrom(III)oxid, welches als Farbpigment, Schleifmittel sowie aus Ausgangsmaterial für die Herstellung von hochtemperaturbeständigen Werkstoffen, Chrommetall und chromhaltigen Hochleistungslegierungen eingesetzt werden soll, gestellt werden. Es sind weitere Verfahrensschritte notwendig sind um ein qualitativ hochwertiges Endprodukt zu erhalten.

### Schritt b)

Bevorzugt wird das nach Schritt a) erhaltende Zersetzungsprodukt abgekühlt, vorzugsweise in Wasser aufgenommen, wobei eine Mutterlauge entsteht und ein oder mehrfach vorzugsweise mit Wasser oder einem wässrigen Medium gewaschen. Nach jeder Wäsche wird der Feststoff von der Flüssigkeit vorzugsweise abgetrennt, wobei ein Feststoff und Waschwasser entsteht.

Für die Fest-/Flüssig-Trennung kennt der Fachmann eine Vielzahl von geeigneten Aggregaten und Verfahren. Es ist unerheblich, ob die Wäsche und Fest-/Flüssig-Trennung kontinuierlich oder diskontinuierlich erfolgen. Ebenso ist es unerheblich, ob sie unter Druck oder mit Vakuum durchgeführt werden.

Bei den kontinuierlich arbeitenden Filtrations- und Waschaggregaten sind beispielsweise Vakuum-Trommelfilter oder Vakuum-Bandfilter besonders bevorzugt. Von den diskontinuierlich arbeitenden Filtrations- und Waschaggregaten werden Filterpressen besonders bevorzugt.

Um die Filtrations- beziehungsweise Wascheigenschaften des thermischen Zersetzungsproduktes des Alkalimetall-Ammoniumchromat-Doppelsalzes zu verbessern, kann es vorteilhaft sein, im Waschwasser einen pH-Bereich von 4 bis 7 einzustellen. Dies kann beispielsweise durch Zusatz einer geringen Menge Säure zum Wasser zu einem wässrigen Medium erfolgen, wobei vorzugsweise organische niedermolekulare Säuren wie beispielsweise Ameisensäure oder Essigsäure eingesetzt werden. Diese organischen Säuren haben den Vorteil, dass sie - falls Reste auf dem gewaschenen thermischen Zersetzungsprodukt verbleiben - bei der späteren Kalzinierung verbrannt werden und nicht als Verunreinigung im kalzinierten Produkt verbleiben. Es kann aber auch vorteilhaft sein, wenn bei der Filtration oder Wäsche Flockungsmittel oder Flockungshilfsmittel eingesetzt werden. Der Einsatz von organischen Flockungsmitteln oder Flockungshilfsmitteln ist besonders bevorzugt, weil sie bei der späteren Kalzinierung verbrannt werden und nicht als Verunreinigung im kalzinierten Produkt verbleiben.

Der nach der Wäsche erhaltene feuchte Filterkuchen kann entweder direkt der Kalzinierung gemäß Schritt c) zugeführt werden oder zuvor noch getrocknet werden. Für den Trocknungsschritt kennt der Fachmann eine Vielzahl von geeigneten Aggregaten. Es seien an dieser Stelle nur Kanal-, Band-, Etagen-, Walzen-, Trommel-, Röhren-, Schaufel-, Sprühtrockner (Zerstäubungstrockner mit Scheiben oder Düsen), Wirbelbetttrockner oder diskontinuierlich arbeitende Kammer-Horden-Trockner erwähnt. Vorzugsweise wird der feuchte Filterkuchen direkt der Kalzinierung zugeführt.

Auf die Weiterverwendung der gesammelten Mutterlaugen und Waschwässer wird weiter unter noch eingegangen.

### Schritt c)

Die thermische Behandlung bei erhöhter Temperatur, also die Kalzinierung, gemäß Schritt c) erfolgt bei einer Temperatur von 700 bis 1400 °C, besonders bevorzugt von 800 bis 1300 °C, vorzugsweise in einem Zeitraum von mehr als 20 Minuten, besonders bevorzugt von mehr als 30 Minuten. Für die Kalzinierung bei derart hohen Temperaturen kennt der Fachmann eine Vielzahl von geeigneten Apparaten. Es seien an dieser Stelle nur Ringherdöfen, Drehrohröfen, Wirbelbettreaktoren oder diskontinuierlich arbeitende Kammeröfen erwähnt. Vorzugsweise erfolgt die Kalzinierung in einem direkt beheizten Drehrohrofen. Die Verweilzeit des zu kalzinierenden Materials liegt je nach Ausgestaltung und Länge des Ofens vorzugsweise bei 30 Minuten bis 4 Stunden. Die Kalzinierung erfolgt vorzugsweise an Luft oder in einer Atmosphäre aus reinem Sauerstoff oder in einer Atmosphäre aus Luft, die mit Sauerstoff angereichert ist.

Die Kalzinierung gemäß Schritt c) erfolgt vorzugsweise in einem anderen Ofen als die Zersetzung in Schritt a).

Das nach dem Schritt b) erhaltene gewaschene Zersetzungprodukt, das in Schritt c) kalzinert wird, neigt nicht zum Kleben, so dass die Kalzinierung problemlos möglich ist.

In einer besonders bevorzugten Variante des erfindungsgemäßen Verfahrens werden vor der thermischen Zersetzung des Alkalimetall-Ammoniumchromat-Doppelsalzes und/oder vor der Kalzinierung ein oder mehrere Alkalimetallhalogenide oder Ammoniumhalogenide oder Erdalkalimetallhalogenide, insbesondere die Fluoride, Chloride, Bromide oder Iodide von Natrium oder Kalium oder Ammonium, oder Alkalimetallhydroxide, insbesondere Natriumhydroxid, oder Kaliumhydroxid, oder Chromsäure in einer Menge von 0.01 Gew.% bis 3.0 Gew.-%, besonders bevorzugt von. 0.02 Gew.-% bis 1.0 Gew.-%, bezogen auf das eingesetzte Alkalimetall-Ammoniumchromat-Doppelsalz zugesetzt. Durch derartige Zusätze können die anwendungstechnischen Eigenschaften, insbesondere die Erhöhung der Schüttdichte des erhaltenen Chrom(III)-oxid beeinflusst werden.

Das nach der Kalzierung gemäß Schritt c) erhaltene Chrom(III)-oxid wird vorzugsweise abgekühlt und gegebenenfalls gemahlen. In einer besonders bevorzugten Variante des erfindungsgemäßen Verfahrens wird das kalzinierte Produkt und mit Wasser ausgelaugt, wobei eine Mutterlauge entsteht und analog zu der Vorgehensweise in Schritt b) gewaschen und anschließend wieder getrocknet. Dadurch können im Chrom(III)-oxid noch vorhandene wasserlösliche Verunreinigungen (wasserlösliche Salze) - im wesentlichen Alkalimetallchromat, insbesondere Natriumchromat, welches durch Oxidation von Chrom(III)-oxid bei hohen Temperaturen entstanden ist - nach bekannten Verfahren ein- oder mehrstufig mit Wasser oder wässrigen Medien ausgewaschen und der Feststoff von der Flüssigkeit abgetrennt werden. Es gelten bevorzugte Ausführungsformen für das Waschen wie unter Schritt b) bereits angegeben sind.

Das Chrom(III)-oxid verfügt in der Regel über gute Filtrations- und Wascheigenschaften, so dass die Einstellung des pH-Wertes oder der Zusatz eines Flockungsmittels oder Flockungshilfsmittels nicht notwendig ist. Das nach der Fest-/Flüssig-Trennung erhaltene feuchte Chrom(III)-oxid wird anschließend noch getrocknet. Das getrocknete Chrom(III)-oxid wird dann vorzugsweise direkt abgefüllt oder gegebenenfalls vor der Abfüllung noch gemahlen.

Für die Trocknung können die bereits oben erwähnten Aggregate eingesetzt werden. Je nach gewähltem Trocknungsaggregat kann es erforderlich sein, dass sich noch ein Mahlschritt anschließt. Aber auch wenn keine Wäsche und Trocknung des kalzinierten Produktes erfolgt ist, kann eine Mahlung vorteilhaft sein. Vorzugsweise wird das kalzinierte und gegebenenfalls gewaschene und getrocknete Produkt noch einer Mahlung unterzogen. Hierzu sind Mahlaggregate unterschiedlicher Bauart geeignet, wie zum Beispiel Walzenmühlen, Kollergänge, Pendelmühlen, Hammermühlen, Stiftmühlen, Turbomühlen, Kugelmühlen oder Strahlmühlen. Wenn das kalzinierte Produkt gewaschen wurde, so kann besonders vorteilhaft ein Mahltrockner verwendet werden, bei dem die Trocknung und Mahlung in nur einem Arbeitsschritt erfolgt. Die Wahl des geeigneten Mahlaggregates richtet sich unter anderem nach dem jeweiligen Anwendungsgebiet für das hergestellte Chrom(III)-oxid.

Wenn das kalzinierte Chrom(III)-oxid beziehungsweise das thermische Zersetzungsprodukt des Alkalimetall-Ammoniumchromat-Doppelsalzes gewaschen werden, so enthält die jeweilige Mutterlauge und das jeweilige Waschwasser in beiden Fällen im wesentlichen Alkalimetallehromat und/oder Alkalimetalldichromat. Diese beiden Wertstoffe können wieder in den Produktionsprozess zurückgeführt werden, indem sie beispielsweise für die Herstellung von Alkalimetalldichromat oder ganz besonders bevorzugt für die Her stellung eines Akalimetall-Ammoniumchromat-Doppelsalzes eingesetzt werden, insbesondere wie sie unten beschrieben ist. Besonders bevorzugt werden Mutterlaugen und Waschwässer, welche bei der Wäsche des thermischen Zersetzungsproduktes und/oder kalzinierten Produktes anfallen, wieder für die Herstellung von Alkalimetalldichromat oder eines Alkalimetall-Ammoniumchromat-Doppelsalzes eingesetzt. Ganz besonders bevorzugt für die Herstellung eines Alkalimetall-Ammoniumchromat-Doppelsalzes.

Das nach dem erfindungsgemäßen Verfahren hergestellte Chrom(III)-oxid ist hochrein. Es eignet sich folglich hervorragend für metallurgische Zwecke wie die Herstellung von Chrommetall oder chromhaltigen Hochleistungslegierungen, insbesondere durch Reduktion in Gegenwart von Aluminiummetall über das aluminothermische Verfahren, und für die Herstellung von hochtemperaturbeständigen Werkstoffen, es kann aber auch als Farbpigment für pigmentäre Anwendungen eingesetzt werden, da es auch einen niedrigen Gehalt an wasserlöslichen Salzen aufweist.

Die Erfindung umfasst auch die Verwendung des nach dem erfindungsgemäßen Verfahren hergestellten Chrom(III)-oxids, als Farbpigment, Schleifmittel sowie als Ausgangsmaterial für die Herstellung von hochtemperaturbeständigen Werkstoffen, Chrommetall oder chromhaltigen Hochleistungslegierungen, insbesondere durch Reduktion in Gegenwart von Aluminiummetall über das aluminothermische Verfahren.

Bevorzugt ist es, dass das eingesetzte Alkali-Ammoniumchromat-Doppelsalz dadurch hergestellt wird, dass man NH₃, vorzugsweise in einem 1.0 bis 5.0fachen, besonders bevorzugt in einem 1.4 bis 4.5fachen, molaren Überschuss, bezogen auf Alkalidichromat, insbesondere M₂Cr₂O₇, worin M für Na oder K steht, insbeondere für Na" vorzugsweise bei einer Temperatur von 55 bis 95 °C, zu einer wässrigen Lösung von Alkalidichromat, insbesondere M₂Cr₂O₇ zugibt.

Ein Verfahren zur Herstellung von Alkali-Ammoniumchromat-Doppelsalzen der Formel

Mₓ(NH₄)_{y}CrO₄

oder deren Hydrate, worin
- M: für Na oder K steht,
- x: für eine Zahl von 0:1 bis 0.9, vorzugsweise von 0.4 bis 0.7
- y: für eine Zahl von 1.1 bis 1.9, vorzugsweise von 1.3 bis 1.6 und
die Summe von x und y für 2 steht, ist dadurch gekennzeichnet, dass man NH₃, vorzugsweise in einem 1.0 bis 5.0fachen, besonders bevorzugt in einem 1.4 bis 4.5fachen, molaren Überschuss bezogen auf M₂Cr₂O₇, bei einer Temperatur von 55 bis 95 °C zu einer wässrigen Lösung von M₂Cr₂O₇ zugibt.

In S.W. Johnson "Chemische Notizen", Journal für praktische Chemie, Bd. 62, Seiten 261 - 264 wird eine Verbindung der Formel K(NH₄)Cr₂O₇ durch Umsetzung von NH₃ und K₂Cr₂O₇ inder Kälte hergestellt.

Die Verwendung von Alkalimetall-Ammoniumchromat-Doppelsalzen, insbesondere Natrium-Ammoniumchromat-Doppelsalzen zur Herstellung von hochreinem, schwefelarmem Chrom(III)-oxid weist gegenüber den im Stand der Technik beschriebenen Verfahren einige wesentliche Vorteile auf. So verläuft die thermische Zersetzung von Alkalimetall-Ammoniumchromat-Doppelsalzen, insbesondere Natrium-Ammoniumchromat-Doppelsalzen im Gegensatz zur thermischen Zersetzung von Ammoniumdichromaten keineswegs stürmisch, das heißt nicht explosiv. Die Reaktion kann somit wesentlich besser kontrolliert und beherrscht werden. Das nach der thermischen Zersetzung erhaltene Zersetzungsprodukt sowie das nach der Kalzinierung erhaltene Produkt zeichnen sich durch eine wesentlich höhere Schüttdichte aus, als Chrom(III)-oxid, welches durch die thermische Zersetzung von Ammoniumdichromat erhalten wurde. Als Konsequenz aus diesen beiden Erscheinungen neigt das nach der thermischen Zersetzung von Alkalimetall-Ammoniumchromat-Doppelsalzen, insbesondere Natrium-Ammoniumchromat-Doppelsalzen erhaltene Chrom(III)-oxid auch deutlich weniger zum Stauben, was prozesstechnisch sehr vorteilhaft ist. Ein weiterer Vorteil des erfindungsgemäßen Verfahrens ist, dass sich als Nebenprodukte Alkalimetallchromat und/oder Alkalimetalldichromat bilden, welche problemlos wieder in den Herstellungsprozess zurückgeführt werden können. Das nach dem erfindungsgemäßen Verfahren anfallende Chrom(III)-oxid ist hochrein. Es ist per se schwefelarm, weil keine Schwefelverbindungen in den Produktionsprozess eingebracht werden. Des Weiteren ist es alkalimetallarm. Als "schwefelarm" im Sinne dieser Erfindung gelten Chrom(III)-oxide, die einen Schwefelgehalt von weniger als 200 ppm, vorzugsweise weniger als 50 ppm, ganz besonders bevorzugt weniger als 40 ppm, aufweisen. Als "alkalimetallarm" im Sinne dieser Erfindung gelten Chrom(III)-oxide, die einen Alkalimetallgehalt - gerechnet als Alkalimetall - von weniger als 1500 ppm, vorzugsweise weniger als 500 ppm, aufweisen.

Anhand der nachfolgenden Beispiele wird die Erfindung näher erläutet, ohne dass dadurch eine Einschränkung der Erfindung bewirkt werden soll.

### Beispiele

### Herstellung des Natrium-Ammoniumchromat-Doppelsalzes

Bei 60 °C wurde eine 70%ige Lösung von Natriumdichromat Dihydrat (Na₂Cr₂O₇*2H₂O) durch Lösen in Wasser hergestellt. Dann wurde die 2.7fache molare Menge Ammoniak in Bezug auf Natriumdichromat Dihydrat in Form einer 25%igen wässrigen Ammoniaklösung zugetropft, wobei die Temperatur bei mind. 60°C gehalten wurde und das Natrium-Ammoniumchromat-Doppelsalzes in der oben beschriebenen Kristallstruktur ausfiel. Schließlich wurde die warme Suspension bei 60 °C filtriert, der Filterkuchen mit 99%igem Ethanol gewaschen und bei 100 °C bis zur Gewichtskonstanz getrocknet. Eine Analyse des erhaltenen Feststoffes ergab ein Ammonium : Natrium-Verhältnis von 2.61 und unter Berücksichtigung der Bedingung x+y=2 ergibt sich y=1.45 und x=0.55, so dass die reale Zusammensetzung des Natrium-Ammoniumchromat-Doppelsalzes Na_{0.55}(NH₄)_{1.45}CrO₄ betrug.

Das auf diese Weise hergestellte Natrium-Ammoniumchromat-Doppelsalz wurde als Ausgangsmaterial für die unten beschriebenen Beispiele 1 bis 4 eingesetzt.

### Beispiel 1

Das oben beschriebene Natrium-Ammoniumchromat-Doppelsalz wurde 3 Stunden bei 300 °C thermisch zersetzt und das thermische Zersetzungsprodukt mit 90°C heißem Wasser ausgelaugt. Anschließend wurde der Feststoff von der Mutterlauge abgetrennt und gewaschen. Der feuchte Filterkuchen wurde zunächst getrocknet und dann 2 Stunden bei 1200 °C kalziniert. Das kalzinierte Produkt wurde erneut mit 90°C heißem Wasser ausgelaugt. Anschließend wurden der Feststoff von der Mutterlauge abgetrennt und gewaschen und der feuchte Filterkuchen getrocknet. Die Gesamtausbeute an Chrom(III)-oxid in Bezug auf das in der Ausgangsverbindung vorhandene Cr(VI) betrug 60.5% und das Chrom(III)-oxid wies einen Na-Gehalt - gerechnet als Na-Metall - von 150 ppm auf.

### Beispiel 2

Das oben beschriebene Natrium-Ammoniumchromat-Doppelsalz wurde 90 Minuten bei 400 °C thermisch zersetzt und das thermische Zersetzungsprodukt mit 90 °C heißem Wasser ausgelaugt. Anschließend wurde der Feststoff von der Mutterlauge abgetrennt und gewaschen. Der feuchte Filterkuchen wurde zunächst getrocknet und dann 3 Stunden bei 1100 °C kalziniert. Das kalzinierte Produkt wurde erneut mit 90 °C heißem Wasser ausgelaugt. Anschließend wurden der Feststoff von der Mutterlauge abgetrennt und gewaschen und der feuchte Filterkuchen getrocknet. Die Gesamtausbeute an Chrom(III)-oxid in Bezug auf das in der Ausgangsverbindung vorhandene Cr(VI) betrug 56.2% und das Chrom(III)-oxid wies einen Na-Gehalt - gerechnet als Na-Metall - von 850 ppm auf.

### Beispiel 3

Das oben beschriebene Natrium-Ammoniumehromat-Doppelsalz wurde 60 Minuten bei 300 °C thermisch zersetzt, dann wurde die Temperatur im Zeitraum von 2.5 Stunden auf 450 °C erhöht und weitere 60 Minuten bei 450 °C gehalten. Das thermische Zersetzungsprodukt wurde mit 90 °C heißem Wasser ausgelaugt. Anschließend wurde der Feststoff von der Mutterlauge abgetrennt und gewaschen. Der feuchte Filterkuchen wurde zunächst getrocknet und dann 3 Stunden bei 950 °C kalziniert. Das kalzinierte Produkt wurde erneut mit 90 °C heißem Wasser ausgelaugt. Anschließend wurden der Feststoff von der Mutterlauge abgetrennt und gewaschen und der feuchte Filterkuchen getrocknet. Die Gesamtausbeute an Chrom(III)-oxid in Bezug auf das in der Ausgangsverbindung vorhandene Cr(VI) betrug 59.0% und das Chrom(III)-oxid wies einen NaGehalt - gerechnet als Na-Metall - von 1400 ppm auf.

### Beispiel 4

Das oben beschriebene Natrium-Ammoniumchromat-Doppelsalz wurde 45 Minuten bei 500 °C thermisch zersetzt und das thermische Zersetzungsprodukt mit 90 °C heißem Wasser ausgelaugt. Anschließend wurde der Feststoff von der Mutterlauge abgetrennt und gewaschen. Der feuchte Filterkuchen wurde zunächst getrocknet und dann 3 Stunden bei 1150 °C kalziniert. Das kalzinierte Produkt wurde erneut mit 90°C heißem Wasser ausgelaugt. Anschließend wurden der Feststoff von der Mutterlauge abgetrennt und gewaschen und der feuchte Filterkuchen getrocknet. Die Gesamtausbeute an Chrom(III)-oxid in Bezug auf das in der Ausgangsverbindung vorhandene Cr(VI) betrug 66.7% und das Chrom(III)-oxid wies einen Na-Gehalt - gerechnet als Na-Metall - von 1100 ppm auf.

## Patentansprüche

1. Verfahren zur Herstellung von Chrom(III)-oxid, enthaltend die Schritte:
a) Zersetzung eines Alkalimetall-Ammoniumchromat-Doppelsalz, bei einer Temperatur von 200 bis 650 °C, insbesondere von 250 bis 550 °C,
b) waschen des nach a) erhaltenen Zersetzungsproduktes und
c) kalzinieren des nach b) erhaltenen Produktes bei einer Temperatur von 700 bis 1400 °C, insbesondere von 800 bis 1300 °C,
**dadurch gekennzeichnet, dass** das Alkalimetall-Ammoniumchromat-Doppelsalz ein Natrium-Ammoniumchromat-Doppelsalz enthält welches ein molares Ammonium : Natrium-Verhältnis von ≥ 2 aufweist.

2. Verfahren gemäß Anspruch 1, **dadurch gekennzeichnet, dass** das Alkalimetall-Ammoniumchromat-Doppelsalz ein Hydrat enthält.

3. Verfahren gemäß einem oder mehreren der Ansprüche 1 bis 2, **dadurch gekennzeichnet, dass** das kalzinierte Produkt nach Schritt c) gewaschen wird.

4. Verfahren gemäß einem oder mehreren der Ansprüche 1 bis 3, **dadurch gekennzeichnet, dass** das kalzinierte und gegebenenfalls gewaschene und gegebenenfalls getrocknete Produkt einer Mahlung unterzogen wird.

5. Verfahren gemäß einem oder mehreren der Ansprüche 1 bis 4, **dadurch gekennzeichnet, dass** vor der thermischen Zersetzung des Alkalimetall-Ammoniumchromat-Doppelsalzes gemäß Schritt a) und/oder vor der Kalzinierung gemäß Schritt c) ein oder mehrere Alkalimetallhalogenide oder Ammoniumhalogenide oder Erdalkalimetallhalogenide, insbesondere die Fluoride, Chloride, Bromide oder Iodide von Natrium oder Kalium oder Ammonium, oder Alkalimetallhydroxide, insbesondere Natriumhydroxid, oder Kaliumhydroxid, oder Chromsäure in einer Menge von 0.01 Gew.% bis 3.0 Gew.-%, insbesondere von 0.02 Gew.% bis 1.0 Gew.%, bezogen auf das eingesetzte Alkalimetall-Ammoniumchromat-Doppelsalz, zusetzt werden.

6. Verfahren gemäß einem oder mehreren der Ansprüche 1 bis 5 **dadurch gekennzeichnet, dass** man den bei der thermischen Zersetzung des Alkalimetall-Ammoniumchromat-Doppelsalzes freigesetzten Ammoniak als Gas oder wässrige Lösung zurück gewinnt und wieder für die Herstellung des Alkalimetall-Ammoniumchromat-Doppelsalzes einsetzt.

7. Verfahren gemäß einem oder mehreren der Ansprüche 1 bis 6 **dadurch gekennzeichnet, dass** man NH₃ zu einer wässrigen Lösung eines Alkalidichromats zugibt

## Claims

1. Process for preparing chromium(III) oxide, comprising the steps of:
a) decomposing an alkali metal ammonium chromate double salt at a temperature of 200 to 650°C, especially of 250 to 550°C,
b) washing the decomposition product obtained after a) and
c) calcining the product obtained after b) at a temperature of 700 to 1400°C, especially of 800 to 1300°C,
**characterized in that** the alkali metal ammonium chromate double salt comprises a sodium ammonium chromate double salt which has a molar ammonium:sodium ratio of ≥ 2.

2. Process according to Claim 1, **characterized in that** the alkali metal ammonium chromate double salt comprises a hydrate.

3. Process according to one or more of Claims 1 to 2, **characterized in that** the calcined product is washed after step c).

4. Process according to one or more of Claims 1 to 3, **characterized in that** the calcined and optionally washed and optionally dried product is subjected to grinding.

5. Process according to one or more of Claims 1 to 4, **characterized in that** the thermal decomposition of the alkali metal ammonium chromate double salt in step a) and/or the calcination in step c) is preceded by addition of one or more alkali metal halides or ammonium halides or alkaline earth metal halides, especially the fluorides, chlorides, bromides or iodides of sodium or potassium or ammonium, or alkali metal hydroxides, especially sodium hydroxide, or potassium hydroxide, or chromic acid, in an amount of 0.01% by weight to 3.0% by weight, especially of 0.02% by weight to 1.0% by weight, based on the alkali metal ammonium chromate double salt used.

6. Process according to one or more of Claims 1 to 5, **characterized in that** the ammonia released in the thermal decomposition of the alkali metal ammonium chromate double salt is recovered as a gas or aqueous solution and used again for the preparation of the alkali metal ammonium chromate double salt.

7. Process according to one or more of Claims 1 to 6, **characterized in that** NH₃ is added to an aqueous solution of an alkali metal dichromate.

## Revendications

1. Procédé pour la préparation d'oxyde de chrome (III), contenant les étapes :
a) décomposition d'un sel double de chromate de métal alcalin-ammonium, à une température de 200 à 650°C, en particulier de 250 à 550°C,
b) lavage du produit de décomposition obtenu après a) et
c) calcination du produit obtenu après b) à une température de 700 à 1400°C, en particulier de 800 à 1300°C,
**caractérisé en ce que** le sel double de chromate de métal alcalin-ammonium contient un sel double de chromate de sodium-ammonium, qui présente un rapport molaire ammonium:sodium ≥ 2.

2. Procédé selon la revendication 1, **caractérisé en ce que** le sel double de chromate de métal alcalin-ammonium contient un hydrate.

3. Procédé selon l'une ou plusieurs des revendications 1 à 2, **caractérisé en ce que** le produit calciné après l'étape c) est lavé.

4. Procédé selon l'une ou plusieurs des revendications 1 à 3, **caractérisé en ce que** le produit calciné et le cas échéant lavé et le cas échéant séché est soumis à un broyage.

5. Procédé selon l'une ou plusieurs des revendications 1 à 4, **caractérisé en ce qu'**on ajoute, avant la décomposition thermique du sel double de chromate de métal alcalin-ammonium selon l'étape a) et/ou avant la calcination selon l'étape c), un ou plusieurs halogénures de métal alcalin ou halogénures d'ammonium ou halogénures de métal alcalino-terreux, en particulier les fluorures, les chlorures, les bromures ou les iodures de sodium ou de potassium ou d'ammonium, ou un ou plusieurs hydroxydes de métal alcalin, en particulier l'hydroxyde de sodium ou l'hydroxyde de potassium, ou de l'acide chromique en une quantité de 0,01% en poids à 3,0% en poids, en particulier de 0,02% en poids à 1,0% en poids, par rapport au sel double de chromate de métal alcalin-ammonium utilisé.

6. Procédé selon l'une ou plusieurs des revendications 1 à 5, **caractérisé en ce qu'**on récupère l'ammonium libéré lors de la décomposition thermique du sel double de chromate de métal alcalin-ammonium sous forme de gaz ou de solution aqueuse et on l'utilise à nouveau pour la préparation du sel double de chromate de métal alcalin-ammonium.

7. Procédé selon l'une ou plusieurs des revendications 1 à 6, **caractérisé en ce qu'**on ajoute NH₃ à une solution aqueuse d'un dichromate de métal alcalin.
